# EUROPÄISCHE PATENTSCHRIFT

(11) **EP 4 342 692 B1**
(45) Veröffentlichungstag und Bekanntmachung des Hinweises auf die Patenterteilung: **18.11.2026**
(21) Anmeldenummer: 23191507.5
(22) Anmeldetag: 15.08.2023
(51) Int. Cl.: B60C 23/00, B60C 23/04

(54) **SYSTEM UND VERFAHREN ZUR BESTIMMUNG DER POSITION VON FAHRZEUGREIFEN IN EINER REIFENANORDNUNG**
SYSTEM AND METHOD FOR DETERMINING THE POSITION OF VEHICLE TIRES IN A TIRE ASSEMBLY
SYSTÈME ET PROCÉDÉ DE DÉTERMINATION DE LA POSITION DE PNEUS DE VÉHICULE DANS UN ENSEMBLE PNEU

(30) Priorität: 22.09.2022 DE 102022209971
(43) Veröffentlichungstag der Anmeldung: 27.03.2024
(73) Patentinhaber: Continental Reifen Deutschland GmbH, 30175 Hannover (DE)
(72) Erfinder: Mularoni, Nicola, 30165 Hannover (DE); Kliebisch, Sarah, 30165 Hannover (DE); Gläser, Frank, 30165 Hannover (DE); Sahlmüller, Baldo, 30165 Hannover (DE)
(74) Vertreter: Continental Corporation

(56) Entgegenhaltungen:
- EP-A1- 1 616 722
- CN-B- 103 722 992
- DE-A1- 102011 055 886
- US-A1- 2022 161 612
- US-B2- 11 285 765

## Beschreibung

Die Erfindung betrifft ein System zur Bestimmung der Position von Fahrzeugreifen in einer Reifenanordnung eines Fahrzeuges mit Zwillingsbereifung, ein darauf aufbauendes Fahrzeugsystem und ein zugehöriges Verfahren zur Bestimmung der Position von Fahrzeugreifen mit einem entsprechenden System oder Fahrzeugsystem.

Die fortschreitende technische Entwicklung und die zunehmende Digitalisierung betreffen insbesondere auch den Bereich der Fahrzeugtechnik und der Fahrzeugreifen. Es besteht ein fortgesetztes Interesse daran, bei den in Fahrzeugen eingesetzten Komponenten kontinuierlich Leistungsdaten zu erfassen, um beispielsweise die Leistungsfähigkeit und Betriebssicherheit kontinuierlich zu überwachen. Zu den Informationen, die beispielsweise bei Fahrzeugreifen überwacht werden können, gehören beispielsweise der Reifendruck oder die vom Fahrzeugreifen erfahrene Beschleunigung.

In der Praxis müssen die von in Fahrzeugreifen angeordneten Sensoren gesammelten Informationen jedoch nicht nur erfasst und ausgewertet werden, sondern diese Informationen müssen zudem den jeweiligen Fahrzeugreifen in der Reifenanordnung des Fahrzeuges zugeordnet werden, damit beispielsweise identifiziert werden kann, welcher Fahrzeugreifen einer Reifenanordnung einen Druckabfall zeigt, ohne den Fahrzeugführer zu zwingen, zur Identifikation des schadhaften Fahrzeugreifens alle Fahrzeugreifen manuell zu überprüfen.

Die Zuordnung von Reifensensoren zu den Reifenpositionen am Fahrzeug ist insbesondere bei Nutzfahrzeugen mit mehr als vier Reifen eine sehr komplexe Aufgabe, die noch nicht abschließend zur vollständigen Zufriedenheit gelöst ist.

Im Stand der Technik gibt es insbesondere für Personenfahrzeuge Ansätze, die Signalstärke der Sensoren in Bezug auf einen oder mehrere stationäre Empfänger, die beispielsweise am Fahrzeug oder außerhalb des Fahrzeuges angeordnet sein können, zu nutzen. In einem solchen auf einer Signalstärke-Abstandskorrelation basierenden Verfahren wird ausgenutzt, dass die jeweils bestimmte Signalstärke neben der Stärke des Ausgangssignals, die in der Regel sehr stabil ist, insbesondere vom Abstand des Senders und Empfängers abhängt.

Allerdings erfordern die aus dem Stand der Technik bekannten Ansätze zumeist die Installation von weiteren Komponenten und werden in vielen Fällen nicht als zuverlässig genug empfunden, gerade bei Fahrzeugen mit mehr als vier Fahrzeugreifen und/oder Zwillingsbereifung, wie sie insbesondere bei Nutzfahrzeugen auftritt.

Zudem werden viele der aus dem Stand der Technik bekannten Verfahren als unzureichend dafür empfunden, ausgehend von einer einmal identifizierten und/oder vorgegebenen Fahrzeugreifenzuordnung in einem Fahrzeugplan eine Anpassung vorzunehmen, wenn einzelne Fahrzeugreifen ausgetauscht und/oder in ihrer Position verändert werden.

Die US 11285765 B2 betrifft ein Verfahren zur automatischen Ortung von Positionen einer Vielzahl drahtloser Sensoren an einem Fahrzeug und eine Vorrichtung hierfür. Die EP 1 616 722 A1 betrifft ein Verfahren und ein System zur Positionserkennung von Radmodulen an einem Kraftfahrzeug.

Stand der Technik zum allgemeinen technologischen Hintergrund ist beispielsweise in der DE 102011055886 B4, der US 10377189 B2, der US 2013120127 A1, der US 2022/161612 A1, der US 6571617 und der CN103722992B offenbart.

Die primäre Aufgabe der vorliegenden Erfindung war es, die Nachteile des Standes der Technik auszuräumen oder zumindest zu verringern.

Insbesondere war es eine Aufgabe der vorliegenden Erfindung, ein System zur Bestimmung der Position von Fahrzeugreifen in einer Reifenanordnung und ein zugehöriges Verfahren anzugeben, mit denen die Position von Fahrzeugreifen in einer Reifenanordnung besonders zuverlässig möglich sein sollte, insbesondere auch bei Fahrzeugen mit Zwillingsbereifung.

Zudem war es eine Aufgabe der vorliegenden Erfindung, dass sich mit dem anzugebenden System und dem entsprechenden Verfahren effektiv ein Reifenplan der Verteilung der Fahrzeugreifen bzw. der Sensoren (sog. "sensor mapping") erzeugen lassen sollte. Insoweit war es eine weitere Aufgabe der vorliegenden Erfindung, dass mit dem anzugebenden System und dem entsprechenden Verfahren vorgegebene Fahrzeugreifenzuordnungen in einem Reifenplan besonders effizient angepasst werden können, wenn einzelne Fahrzeugreifen ausgetauscht und/oder in ihrer Position verändert werden.

Hierbei war es eine Aufgabe der vorliegenden Erfindung, dass die Bestimmung der Position von Fahrzeugreifen einen möglichst niedrigen Bedarf an Rechenkapazität erfordern sollte.

Es war eine ergänzende Aufgabe der vorliegenden Erfindung, dass das anzugebende System leicht auf eine Vielzahl von bestehenden Fahrzeugsystemen adaptierbar sein sollte, wobei es wünschenswert war, dass möglichst weitgehend auf bestehende Fahrzeugkomponenten zurückgegriffen werden können sollte. Es war insoweit eine zusätzliche Aufgabe der vorliegenden Erfindung, dass das anzugebende System für seine Umsetzung einen möglichst geringen Bedarf an zusätzlichen Vorrichtungen aufweisen sollte.

Es war eine ergänzende Aufgabe der vorliegenden Erfindung, zudem ein vorteilhaftes Fahrzeugsystem anzugeben, in dem die Position von Fahrzeugreifen in der Reifenanordnung des Fahrzeuges besonders zuverlässig bestimmt werden kann.

Die Erfinder haben nunmehr gefunden, dass sich die vorstehend beschriebenen Aufgaben überraschenderweise lösen lassen, wenn die Bestimmung der Position von Fahrzeugreifen in einer Reifenanordnung unter Verwendung eines auf maschinellem Lernen basierenden Positionsbestimmungsmoduls erfolgt, wenn die Signalstärke der mit einer Empfangseinheit von den Fahrzeugreifen empfangenen Signale in Kombination mit einer den jeweiligen Fahrzeugreifen zugeordneten Temperaturinformation als Eingabe in das entsprechend trainierte Positionsbestimmungsmodul eingegeben werden, wie es in den Ansprüchen definiert ist.

Durch die Kombination dieser Merkmale wird nach Erkenntnis der Erfinder ein System zur Bestimmung der Position von Fahrzeugreifen und ein dazu komplementäres Verfahren erhalten, in dem die Zuordnung von Fahrzeugreifen mit deutlich gesteigerter Präzision erfolgen kann, wobei insbesondere auch eine zuverlässige Zuordnung von Fahrzeugreifen in Zwillingspaketen einer Zwillingsbereifung erfolgen kann.

Diese Vorteile werden nach Einschätzung der Erfinder dadurch möglich, dass sich die Temperaturen in verschiedenen Fahrzeugreifen eines Fahrzeuges, bzw. deren zeitliche Entwicklung, je nach ihrer Position zumindest geringfügig unterscheiden, wobei es überraschenderweise mit maschinellem Lernen möglich ist, in diesen zumeist kleinen Temperaturabweichungen ausreichend Zusammenhänge zu erkennen, so dass diese in Kombination mit einem auf einer Signalstärke-Abstandskorrelation basierenden Verfahren zur Bestimmung der Position von Fahrzeugreifen zu ausgezeichneten Ergebnissen führen, auch wenn die als Eingabedaten verwendeten Temperaturinformationen für den menschlichen Benutzer nicht auf den ersten Blick verwertbare Informationen umfassen.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Fahrzeugsysteme und Verfahren ergeben sich aus den Merkmalen bevorzugter Systeme.

Die Erfindung betrifft insbesondere ein System zur Bestimmung der Position von Fahrzeugreifen in einer Reifenanordnung eines Fahrzeuges mit Zwillingsbereifung, umfassend:
i) zwei oder mehr Systemfahrzeugreifen,
ii) eine zentrale elektronische Empfangseinheit zum Empfangen von Signalen in einem drahtlosen Übertragungsverfahren, und
iii) eine elektronische Auswerteeinheit, mit einer Speichereinheit,

wobei jeder Systemfahrzeugreifen eine Temperatursensoreinheit zum Bestimmen einer dem jeweiligen Systemfahrzeugreifen zugeordneten Temperaturinformation umfasst, wobei die Temperaturinformation eine zeitabhängige Temperaturinformation ist,
wobei jeder Systemfahrzeugreifen eine elektronische Sendeeinheit zum Senden von Signalen in einem drahtlosen Übertragungsverfahren umfasst,
wobei die Empfangseinheit dazu eingerichtet ist, die von den Sendeeinheiten der Systemfahrzeugreifen gesendeten Signale zu empfangen und deren Signalstärke zu ermitteln, um eine dem jeweiligen Systemfahrzeugreifen zugeordnete Signalinformation zu erhalten,
wobei die Empfangseinheit dazu eingerichtet ist, für jeden Systemfahrzeugreifen die Temperaturinformation und die Signalinformation an die elektronische Auswerteeinheit zu übermitteln,
wobei auf der Speichereinheit ein auf maschinellem Lernen basierendes Positionsbestimmungsmodul gespeichert ist, wobei die elektronische Auswerteeinheit dazu eingerichtet ist, die Temperaturinformationen und die Signalinformationen als Eingabe in das Positionsbestimmungsmodul zu geben und die Position der Systemfahrzeugreifen in der Reifenanordnung zu bestimmen,
wobei das Positionsbestimmungsmodul dazu trainiert ist, aus den Temperaturinformationen und den Signalinformationen von Systemfahrzeugreifen in einer Reifenanordnung die Position der Systemfahrzeugreifen in der Reifenanordnung zu bestimmen, und
wobei das Training mit einem Satz von Trainingsdaten erfolgt, welcher für eine Vielzahl von Reifenanordnungen mit bekannter Position der Systemfahrzeugreifen Temperaturinformationen und Signalinformationen umfasst.

Das erfindungsgemäße System ist zur Bestimmung der Position von Fahrzeugreifen in einer Reifenanordnung geeignet. Diese Reifenanordnung kann Teil eines Fahrzeuges, beispielsweise eines angetriebenen Fahrzeugs oder eines Anhängers, sein und entsprechend auf Achsen montierte Fahrzeugreifen umfassen, ist darauf jedoch nicht beschränkt, so dass beispielsweise auch ein Einsatz in anderen Reifenanordnungen denkbar ist, wie sie beispielsweise zum Antrieb von Fahrgeschäften auf Jahrmärkten verwendet werden.

Das System umfasst als Teil einer Reifenanordnung zumindest zwei Systemfahrzeugreifen. Der Ausdruck Systemfahrzeugreifen bringt dabei zum Ausdruck, dass diese Fahrzeugreifen für den Einsatz in dem erfindungsgemäßen System ausgerüstet sind und jeweils insbesondere eine Temperatursensoreinheit und eine elektronische Sendeeinheit umfassen. Somit unterscheiden sich die Systemfahrzeugreifen von anderen Fahrzeugreifen, die die entsprechende Funktionalität nicht aufweisen. Der Fachmann versteht, dass das erfindungsgemäße System neben Systemfahrzeugreifen auch weitere Fahrzeugreifen umfassen kann, die beispielsweise über gar keine Sensorik verfügen, beispielsweise in der Form von Reserverädern, dass diese aber nicht in das entsprechende Verfahren zur Bestimmung der Position von Fahrzeugreifen einbezogen werden. Auch wenn auch für andere Konstruktionsweisen von Fahrzeugreifen eine Sensorbestückung denkbar ist, ist für die meisten Fälle ein erfindungsgemäßes System relevant, wobei die Systemfahrzeugreifen Fahrzeugluftreifen sind.

Der Fachmann versteht, dass das erfindungsgemäße System insbesondere durch die zuverlässige Identifikation von Reifenpositionen auch in Zwillingspaketen einer Zwillingsbereifung vor allem für Nutzfahrzeuge interessant ist. Entsprechend wird es sich in der Praxis häufig um ein erfindungsgemäßes System handeln, wobei die Systemfahrzeugreifen Nutzfahrzeugreifen, bevorzugt LKW-Reifen, sind. Gerade in Reifenanordnungen mit einer Vielzahl von Fahrzeugreifen ist die zuverlässige Bestimmung der Reifenposition regelmäßig schwierig. Die damit verknüpften Probleme und Unsicherheiten bei der Zuordnung nehmen bei den aus dem Stand der Technik bekannten Verfahren dabei häufig mit der Zahl der zuzuordnenden Fahrzeugreifen zu. In vorteilhafter Weise ist dies in dem erfindungsgemäßen System aber durch die zusätzliche Berücksichtigung der Temperatur und den Einsatz von maschinellem Lernen auch in Systemen mit vielen Fahrzeugreifen sehr effizient möglich. Entsprechend ist ein erfindungsgemäßes System bevorzugt, wobei das System vier oder mehr, bevorzugt sechs oder mehr, besonders bevorzugt acht oder mehr, Systemfahrzeugreifen umfasst.

Bei den aus dem Stand der Technik bekannten Ansätzen, die versuchen, die Zuordnung der Fahrzeugreifen über die von einer zentralen Einheit bestimmten Signalstärken zu ermitteln, erweist sich insbesondere die zuverlässige Zuordnung von Fahrzeugreifen in Zwillingspaketen einer Zwillingsbereifung als besonders schwierig, da diese sich im Abstand zu der zentralen Einheit und damit in der Signalstärke häufig nur geringfügig unterscheiden. Bekannterweise kommen diese Anordnungen jedoch gerade bei Nutzfahrzeugen wie LKW häufig vor. In vorteilhafter Weise ergibt sich in dem erfindungsgemäßen System durch die Berücksichtigung der Temperatur und durch die KI-gestützte Auswertung jedoch eine besonders effiziente Identifikation solcher Fahrzeugreifen, da insbesondere die Fahrzeugreifen eines Zwillingspaketes nach Einschätzung der Erfinder regelmäßig eine unterschiedliche Temperaturentwicklung zeigen, insbesondere in Folge einer unterschiedlichen Sonneneinstrahlung im Betrieb, ggf. in Kombination mit einem unterschiedlichen Abkühlungsverhalten für die näher in der Fahrzeugmitte liegenden Fahrzeugreifen. Besonders bevorzugt ist entsprechend ein erfindungsgemäßes System, wobei zumindest zwei Systemfahrzeugreifen in der Reifenanordnung einen Abstand zueinander aufweisen, der 20 % oder weniger, bevorzugt 10 % oder weniger, besonders bevorzugt 5 % oder weniger, des größten Abstandes zwischen zwei Systemfahrzeugreifen im System beträgt.

Die Systemfahrzeugreifen umfassend jeweils eine Temperatursensoreinheit zum Bestimmen einer dem jeweiligen Systemfahrzeugreifen zugeordneten Temperaturinformation, die im erfindungsgemäßen System bzw. in dem erfindungsgemäßen Verfahren zusammen mit den Informationen über die Signalstärken verwendet werden, um mittels des KI-basierten Positionsbestimmungsmoduls die Position von Fahrzeugreifen zuzuweisen.

Erfindungsgemäß wird es sich bei den Temperaturinformationen dabei zweckmäßigerweise um in irgendeiner Weise zeitabhängige Temperaturinformationen handeln, beispielsweise eine Vielzahl an disktreten Werten mit Zeitstempel oder eine mehr oder weniger kontinuierliche Temperaturkurve, die mit einer vergleichsweise hohen Messfrequenz, beispielsweise von 1 Hz oder mehr, bevorzugt von 5 Hz oder mehr, besonders bevorzugt von 10 Hz oder mehr, aufgenommen wird. Dies ist zweckmäßig, da sich die Unterschiede zwischen verschiedenen Fahrzeugreifen nach Erkenntnis der Erfinder insbesondere in der zeitlichen Evolution der Temperaturdaten zeigen, wie sie beispielsweise während der Fahrt registriert werden können. Erfindungsgemäß ist entsprechend ein erfindungsgemäßes System, wobei die Temperaturinformation eine zeitabhängige Temperaturinformation ist. Besonders bevorzugt ist hierbei ein erfindungsgemäßes System, wobei die zeitabhängige Temperaturinformation eine Vielzahl an disktreten Temperaturwerten umfasst, die in einem zeitlichen Abstand von 5 s oder mehr, bevorzugt 10 s oder mehr, besonders bevorzugt 20 s oder mehr, bestimmt werden, wobei der zeitliche Abstand bevorzugt im Bereich von 5 bis 200 s, bevorzugt im Bereich von 10 bis 150 s, liegt.

Hieran anknüpfend haben die Erfinder erkannt, dass sich solche Unterschiede im Temperaturverhalten der Fahrzeugreifen, welche durch das Positionsbestimmungsmodul besonders gut ausgewertet werden können, insbesondere im Fahrbetrieb aufzeichnen lassen, da diese regelmäßig ausgeprägter sind als beim Stand eines Fahrzeuges oder sogar bei der Lagerung. Der Fachmann versteht, dass es dabei zweckmäßig ist, auch das Positionsbestimmungsmodul mit solchen Daten zu trainieren, die unter solchen Bedingungen aufgenommen wurden. Bevorzugt ist entsprechend ein erfindungsgemäßes System, wobei die Temperaturinformation eine Information ist, die im Fahrbetrieb eines mit dem System ausgerüsteten Fahrzeuges aufgenommen wird, und/oder wobei die Temperatursensoreinheit dazu eingerichtet ist, die dem jeweiligen Systemfahrzeugreifen zugeordnete Temperaturinformation im Fahrbetrieb eines mit dem System ausgerüsteten Fahrzeuges zu bestimmen, wobei der Satz von Trainingsdaten für eine Vielzahl von Reifenanordnungen mit bekannter Position der Systemfahrzeugreifen Temperaturinformationen umfasst, die im Fahrbetrieb eines mit der Reifenanordnung ausgerüsteten Fahrzeuges aufgenommen wurden.

Der Fachmann versteht, dass der Ausdruck "Temperaturinformation" im Rahmen der vorliegenden Erfindung fachmännisch breit auszulegen ist. Neben diskreten Temperaturwerten oder zeitabhängigen Temperaturinformationen in Form einer Messkurve sind auch solche Informationen umfasst, die sich mittelbar aus gemessenen Temperaturen bzw. deren Verläufen ergeben, beispielsweise normierte Werte, zeitliche Ableitungen, Mittelwerte mehrerer Sensoreinheiten oder prozessierte Messwerte, die beispielsweise unter Anwendung von Korrektur- und/oder Glättungsfunktionen erhalten werden.

Die Systemfahrzeugreifen umfassen jeweils eine elektronische Sendeeinheit zum Senden und Empfangen von Signalen in einem drahtlosen Übertragungsverfahren. Dazu komplementär umfasst das erfindungsgemäße System eine elektronische Empfangseinheit, die mit den elektronischen Sendeeinheiten kommunizieren kann. Der Fachmann versteht, dass die Sendeeinheiten und die Empfangseinheit entsprechend mit einem aufeinander abgestimmten drahtlosen Übertragungsverfahren arbeiten. Hierbei sind nach Einschätzung der Erfinder insbesondere funkbasierte Verfahren geeignet. Bevorzugt ist somit ein erfindungsgemäßes System, wobei die Empfangseinheit eine Funkeinheit zum Empfangen von Signalen mittels Funktechnik ist, beispielsweise mittels Ultrabreitband, Bluetooth, LTE oder 5G, bevorzugt mit einer Frequenz im Bereich von 300 bis 450 MHz. Bevorzugt ist entsprechend auch ein erfindungsgemäßes System, wobei die elektronischen Sendeinheiten Funkeinheiten zum Senden von Signalen mittels Funktechnik sind, beispielsweise mittels Ultrabreitband, Bluetooth, LTE oder 5G, bevorzugt mit einer Frequenz im Bereich von 300 bis 450 MHz. Grundsätzlich kann für die drahtlose Kommunikation eine breite Spanne an möglichen Frequenzbereichen zum Einsatz kommen, beispielsweise aus dem Bereich der Hochfrequenz. Bevorzugt ist ein erfindungsgemäßes System, wobei die Empfangseinheiten und die Sendeinheiten mit einer Frequenz im Bereich von 300 bis 450 MHz, kommunizieren.

Für die grundsätzliche Funktionalität bei der Bestimmung der Position von Fahrzeugreifen in einer Reifenanordnung setzt das erfindungsgemäße System auf den Umstand, dass die Signalstärke des von den Sendeeinheiten gesendeten Signals, welches an der Empfangseinheit registriert wird, von dem Abstand zwischen der Sendeeinheit und der Empfangseinheit abhängig ist. Der so erhaltene Satz an Signalinformationen wird zusammen mit den Temperaturinformationen durch die elektronische Auswerteeinheit ausgewertet, die hierfür auf ein auf maschinellem Lernen basierendes Positionsbestimmungsmodul zurückgreift.

Nach Einschätzung der Erfinder ist es zweckmäßig, die Temperatursensoreinheit bzw. die Sendeeinheit im Inneren der Fahrzeugreifen anzuordnen. Bevorzugt ist entsprechend ein erfindungsgemäßes System, wobei die Temperatursensoreinheit und/oder die Sendeeinheit, bevorzugt die Temperatursensoreinheit und die Sendeeinheit, zumindest teilweise, bevorzugt sämtlich, im Inneren der Systemfahrzeugreifen angeordnet sind, wobei die Temperatursensoreinheit und/oder die Sendeeinheit bevorzugt an der Reifeninnenschicht befestigt oder in den Gummiwerkstoff eingebettet sind.

Der Fachmann versteht, dass das erfindungsgemäße System bzw. das erfindungsgemäße Verfahren umso leistungsfähiger wird, umso geringer der Einfluss von sonstigen Störfaktoren oder Abweichungen auf die Bewertung ist, die bei der Bestimmung berücksichtigt werden müssen. Entsprechend sollten nach Einschätzung der Erfinder vermeidbare Störfaktoren bestmöglich vermieden werden. Hierzu zählt insbesondere, dass naturgemäß Sendeeinheiten mit möglichst gleichen Ausgangssignalstärken eingesetzt werden sollten, die zweckmäßigerweise auch an möglichst ähnlichen Positionen in den Systemfahrzeugreifen platziert werden sollten. Zugleich sollten auch die Temperaturinformationen möglichst an gleichen Stellen im Fahrzeugreifen gesammelt werden, um Unterschiede, die sich lediglich aus der Positionierung der Fahrzeugreifen ergeben, nicht durch Anordnungseffekte im Reifen zu kaschieren. In Übereinstimmung mit dem fachmännischen Verständnis bezieht sich die gleiche Anordnung in den weitgehend rotationssymmetrischen Fahrzeugreifen auf die Positionierung entlang der axialen und/oder radialen Richtung sowie die etwaige Anordnung relativ zu anderen Komponenten, beispielsweise die Anordnung auf der Reifeninnenschicht im Bereich des Laufstreifen im Vergleich zur Anordnung an der äußeren Seitenwand, und nicht auf die Anordnung relativ zur Umfangsrichtung.

Bevorzugt ist entsprechend ein erfindungsgemäßes System, wobei die Sendeeinheiten dazu eingerichtet sind, Signale mit einer Ausgangssignalintensität zu senden, die sich zwischen den Sendeeinheiten der unterschiedlichen Systemfahrzeugreifen um weniger als 10 %, bevorzugt um weniger als 5 %, besonders bevorzugt um weniger als 1 %, ganz besonders bevorzugt um weniger als 0,5 %, unterscheidet. Bevorzugt ist zusätzlich oder alternativ ein erfindungsgemäßes System, wobei die Temperatursensoreinheiten zumindest teilweise, bevorzugt sämtlich, an der gleichen Position des jeweiligen Systemfahrzeugreifens angeordnet sind, bezogen auf die radiale und/oder axiale Richtung. Bevorzugt ist zusätzlich oder alternativ zudem ein erfindungsgemäßes System, wobei die Sendeeinheiten zumindest teilweise, bevorzugt sämtlich, an der gleichen Position des jeweiligen Systemfahrzeugreifens angeordnet sind, bezogen auf die radiale und/oder axiale Richtung.

Im Lichte der vorstehenden Ausführungen kann es als besonderer Vorteil der Erfindung gesehen werden, dass für die verschiedenen Sendeeinheiten im Wesentlichen gleichartige Sendeeinheiten eingesetzt werden können. Zudem lassen sich vorteilhafterweise auch baugleiche Temperatursensoren einsetzten. Hierdurch werden nicht nur die Herstellungskosten und der Ausrüstungsaufwand reduziert, sondern zudem lassen sich Unterschiede in der Signalstärke bzw. den gemessenen Temperaturen besonders zuverlässig einer unterschiedlichen Positionierung in der Reifenanordnung zuweisen. Bevorzugt ist entsprechend ein erfindungsgemäßes System, wobei die Temperatursensoreinheiten zumindest teilweise, bevorzugt sämtlich, die gleiche Bauart aufweisen. Bevorzugt ist zusätzlich oder alternativ ein erfindungsgemäßes System, wobei die Sendeeinheiten zumindest teilweise, bevorzugt sämtlich, die gleiche Bauart aufweisen.

Der Fachmann versteht, dass das von den Sendeeinheiten zum Zwecke der Bestimmung der Signalinformation gesendete Signal prinzipiell eine beliebige Information umfassen kann, so lange die Empfangseinheit in die Lage versetzt wird, die Signalstärke zu bestimmen. Zweckmäßigerweise sollte für das erfindungsgemäße Verfahren aber beispielsweise das Signal für die Bewertung der Signalstärke verwendet werden, mit dem die Sendeeinheit die Temperaturinformation an die Empfangseinheit übermittelt, damit diese sie an die elektronische Auswerteeinheit weiterleiten kann. Auch wenn es somit zumindest theoretisch möglich ist, dass es in einem Systemfahrzeugreifen eine dezidierte Sendeeinheit gibt, die nur der Umsetzung des auf Signalstärke-Abstandskorrelation basierenden Verfahrens dient, wohingegen die Temperaturinformationen über eine zweite Sendeeinheit an die Empfangseinheit übermittelt werden, ist es nach Einschätzung der Erfinder für im Wesentlichen alle Ausführungsformen bevorzugt, wenn das gesendete Signal der Sendeeinheit die Temperaturinformationen umfasst, so dass die Sendeeinheit dazu eingerichtet ist, die Temperaturinformationen mit einem drahtlosen Übertragungsverfahren an die Empfangseinheit zu senden. Im Lichte der vorstehenden Ausführungen schlagen die Erfinder vor, dass mit Blick auf die benötigten Bauteile, den notwendigen Ausrüstungsaufwand der Systemfahrzeugreifen und die erhaltbare Datenqualität, ein besonders vorteilhaftes System erhalten wird, wenn die Temperatursensoreinheit und die Sendeeinheit in das gleiche Bauteil integriert werden. Besonders bevorzugt ist demgemäß ein erfindungsgemäßes System, wobei die Temperatursensoreinheit und die Sendeeinheit, bevorzugt die Temperatursensoreinheit, die Sendeeinheit und die weiteren Sensoreinheiten, durch die gleiche Einheit gebildet werden, wobei die Temperaturinformation bevorzugt mittels der Sendeeinheit an die Empfangseinheit übermittelt wird.

In der Praxis ist die Anordnung von Fahrzeugreifen in einem Fahrzeugsystem zumeist symmetrisch. Dadurch ist bedingt, dass es in vielen Fällen zwei Systemfahrzeugreifen geben wird, die sich nur schwer voneinander unterscheiden lassen. Diese Problematik kann vorteilhafterweise dadurch gelöst werden, dass in dem vorstehend beschriebenen erfindungsgemäßen System über die Positionierung der Empfangseinheit eine gezielte Asymmetrie erzeugt wird, durch die die einzelnen Systemfahrzeugreifen einer symmetrischen Reifenanordnung einen unterschiedlichen Abstand zu der Empfangseinheit aufweisen, die infolgedessen eine unterschiedliche Signalstärke detektieren kann. Besonders bevorzugt ist entsprechend ein erfindungsgemäßes System, wobei die Empfangseinheit seitlich neben der Längsachse und/oder der Querachse, bevorzugt neben der Längsachse und der Querachse, der Reifenanordnung angeordnet ist. Bevorzugt ist zusätzlich oder alternativ ein erfindungsgemäßes System, wobei die Empfangseinheit so angeordnet ist, dass sämtliche Systemfahrzeugreifen einen unterschiedlichen Abstand zu der Empfangseinheit aufweisen.

Als vorteilhafte Weiterentwicklung des erfindungsgemäßen Systems und des zugehörigen Verfahrens schlagen die Erfinder vor, dass neben den Temperaturinformationen auch weitere Parameter berücksichtigt werden können, die über entsprechende Sensorik in den Systemfahrzeugreifen bestimmt werden, um die Zuverlässigkeit der Positionszuordnung weiter zu erhöhen. Diesem Ansatz liegt die Idee zugrunde, dass neben der Temperatur auch weitere Zustandsparameter eine -jedenfalls für das menschliche Auge unmerkliche- Abhängigkeit von der Position in einer Reifenanordnung ausweisen, die über das auf maschinellem Lernen basierende Positionsbestimmungsmodul einbezogen werden können. Der Fachmann versteht insoweit, dass hierzu auch das Training des Positionsbestimmungsmoduls angepasst werden muss, indem der im Rahmen des überwachten Lernens eingesetzte Satz an Trainigsdaten auch Parameterinformationen über die zusätzlich einzubeziehenden Parameter umfassen muss. Bevorzugt ist entsprechend ein erfindungsgemäßes System, wobei die Systemfahrzeugreifen eine oder mehrere weitere Sensoreinheiten zur Bestimmung einer oder mehrerer weiterer Parameterinformationen, bevorzugt weiterer zeitabhängiger Parameterinformationen, der Systemfahrzeugreifen umfassen, wobei die Empfangseinheit dazu eingerichtet ist, für jeden Systemfahrzeugreifen die eine oder die mehreren Parameterinformationen an die elektronische Auswerteeinheit zu übermitteln, wobei die elektronische Auswerteeinheit dazu eingerichtet ist, die Temperaturinformationen, die Signalinformationen und die eine oder die mehreren Parameterinformationen als Eingabe in das Positionsbestimmungsmodul zu geben und die Position der Systemfahrzeugreifen in der Reifenanordnung zu bestimmen, wobei das Positionsbestimmungsmodul dazu trainiert ist, aus den Temperaturinformationen, den Signalinformationen und der einen oder den mehreren Parameterinformationen von Systemfahrzeugreifen in einer Reifenanordnung die Position der Systemfahrzeugreifen in der Reifenanordnung zu bestimmen, wobei das Training mit einem Satz von Trainingsdaten erfolgt, welcher für eine Vielzahl von Reifenanordnungen mit bekannter Position der Systemfahrzeugreifen Temperaturinformationen, Signalinformationen und eine oder mehrere Parameterinformationen umfasst.

Bevorzugt ist hierbei ein erfindungsgemäßes System, wobei die eine oder die mehreren weiteren Sensoreinheiten ausgewählt sind aus der Gruppe bestehend aus Drucksensoren und Beschleunigungssensoren, und/oder wobei die weiteren Parameterinformationen ausgewählt sind aus der Gruppe bestehend aus Druckinformationen und Beschleunigungsinformationen.

Die Empfangseinheit ist erfindungsgemäß dazu eingerichtet, für jeden Systemfahrzeugreifen die Temperaturinformation und die Signalinformation an die elektronische Auswerteeinheit zu übermitteln. Diese Übermittlung kann dabei direkt oder indirekt erfolgen, beispielsweise indem die Empfangseinheit die entsprechenden Informationen zunächst an eine zwischengeschaltete Einheit, beispielsweise an eine Kommunikationseinheit oder eine sogenannte Telematik übermittelt, die die Informationen anschließend an die elektronische Auswerteeinheit weiterleiten. Eine entsprechende Ausgestaltung ist vor allem dann zweckmäßig, wenn die Empfangseinheit selbst keine ausreichenden Kapazitäten zum Senden der Informationen in einem drahtlosen Übertragungsverfahren umfasst, die geeignet sind, die Daten beispielsweise über ein Funknetzwerk über lange Strecken zu übertragen. Bevorzugt umfasst die Empfangseinheit jedoch selbst Mittel zur direkten Übertragung der entsprechenden Informationen.

Die Auswerteeinheit ist im erfindungsgemäßen System dazu vorgesehen, mittels des auf maschinellem Lernen basierenden Positionsbestimmungsmoduls die notwendigen Rechenoperationen auszuführen, um aus den Signalinformationen die Position der Systemfahrzeugreifen abzuleiten. Die Auswerteeinheit kann beispielsweise in einem Fahrzeug als Teil eines erfindungsgemäßen Fahrzeugsystems angeordnet sein und beispielsweise auch durch die gleiche elektronische Datenverarbeitungsvorrichtung gebildet werden, die auch die Empfangseinheit steuert oder mit dieser mit Datenkabeln verbunden sein.

Bevorzugt kann jedoch auch auf eine zentrale Auswerteeinheit zurückgegriffen werden, die die notwendigen Informationen drahtlos von der Empfangseinheit übermittelt bekommt. Bevorzugt ist entsprechend ein erfindungsgemäßes System, wobei die Empfangseinheit dazu eingerichtet ist, die Temperaturinformationen und die Signalinformationen direkt oder indirekt über eine zwischengeschaltete Kommunikationseinheit, mit einem drahtlosen Übertragungsverfahren an die elektronische Auswerteeinheit zu übermitteln.

Die Bestimmung der Position von Fahrzeugreifen in der Reifenanordnung durch die Auswerteeinheit ausgehend von den Signalinformationen und den Temperaturinformationen übernimmt die elektronische Auswerteeinheit mittels eines auf maschinellem Lernen basierenden Positionsbestimmungsmoduls.

Das Konzept des maschinellen Lernens an sich sowie geeignete Algorithmen zum maschinellen Lernen sind dem Fachmann ausgehend von seinem Fachwissen grundlegend vertraut und auf maschinellem Lernen basierende Computerprogrammprodukte, welche auf die Erfordernisse der vorliegenden Erfindung angepasst werden können, sind von zahlreichen Herstellern kommerziell erhältlich. Beispielhaft ist ein erfindungsgemäßes System oder Verfahren, wobei das Positionsbestimmungsmodul auf einem Algorithmus zum maschinellen Lernen basiert, der ausgewählt ist aus der Gruppe bestehend aus überwachtem Lernen, bevorzugt ausgewählt ist aus der Gruppe bestehend aus logistischer Regression, Support vector machines, K-nearest neighbors-Verfahren, Entscheidungsbaumverfahren und künstlichen neuronalen Netzen, bevorzugt künstlichen neuronalen Netzen, und/oder wobei das Positionsbestimmungsmodul erhalten wird durch Anwendung eines Algorithmus zum maschinellen Lernen auf den Satz von Trainingsdaten, wobei der Algorithmus ausgewählt ist aus der Gruppe bestehend aus überwachtem Lernen, bevorzugt ausgewählt ist aus der Gruppe bestehend aus logistischer Regression, Support vector machines, K-nearest neighbors-Verfahren, Entscheidungsbaumverfahren und künstlichen neuronalen Netzen, bevorzugt künstlichen neuronalen Netzen.

Zum Erhalt des Positionsbestimmungsmoduls (d.h. dem "Training") greift der Fachmann auf einen Trainingssatz von Trainingsdaten zurück, bei denen es sich um Datensätze an Signalinformationen und Temperaturinformationen handelt, welche an Systemfahrzeugreifen, d.h. entsprechend mit Sensorik versehenen Fahrzeugreifen, aufgenommen wurden, bei denen die Reifenanordnung und die Position der Systemfahrzeugreifen bekannt ist, sodass das Identifikationsmodul mittels überwachtem Lernen (sogenanntes "supervised learning") trainiert werden kann, um die gewünschte Funktionalität zu ermöglichen. Entsprechende Datensätze, die zumindest die nötige Grundfunktionalität eröffnen, sind für den Fachmann im Bereich der Reifentechnik in der Praxis relativ schnell zu generieren. Hierbei werden beispielsweise Referenzfahrzeuge mit entsprechenden Systemfahrzeugreifen ausgerüstet und die Signalinformationen und die Temperaturinformationen beispielsweise im Betrieb ermittelt, wobei bei der Generation des Datensatzes eine sichere Zuordnung dadurch unterstützt werden kann, dass an jedem von mehreren Fahrzeugen jeweils nur bestimmte Fahrzeugreifen als Systemfahrzeugreifen ausgeführt werden und/oder dadurch, dass die Signale der Sendeeinheiten bewusst unterscheidbar ausgestaltet werden, beispielsweise hinsichtlich der Frequenz und/oder des Sendeschemas.

Wie im Bereich des maschinellen Lernens üblich, verbessert der Umfang des Trainigssatzes häufig die Leistungsfähigkeit, so dass der Fachmann die Zuordnungsqualität weiter erhöhen kann, wenn er einen möglichst umfassenden Trainigssatz generiert.

Nach Einschätzung der Erfinder kann dabei ausgenutzt werden, dass der Fachmann in den meisten Fällen konkrete Anwendungsfälle vor Augen haben wird, d.h. einen bestimmten Typ an Fahrzeug, an dem das System eingesetzt werden soll, oder -gerade bei Reifenherstellern zu erwartenein oder mehrere spezifische Reifenmodelle mit dem System anbieten wird. Hierdurch ist es vorteilhafterweise nicht nötig, das Positionsbestimmungsmodul für alle denkbaren Kombinationen zu trainieren, wodurch bereits mit relativ kleinen Trainingssets sehr gute Ergebnisse erhalten werden können. Bevorzugt ist entsprechend ein erfindungsgemäßes System oder Verfahren, wobei der Satz von Trainingsdaten mit einem vorgegebenen Reifentyp zusammengestellt wird, wobei die Systemfahrzeugreifen zumindest teilweise, bevorzugt sämtlich, dem vorgegebenen Reifentyp entsprechen. Bevorzugt ist zusätzlich oder alternativ ein erfindungsgemäßes System oder Verfahren, wobei der Satz von Trainingsdaten mit Fahrzeugreifen eines vorgegebenen Reifenherstellers zusammengestellt wird, wobei die Systemfahrzeugreifen zumindest teilweise, bevorzugt sämtlich, vom vorgegebenen Reifenhersteller stammen. Bevorzugt ist zusätzlich oder alternativ ein erfindungsgemäßes Fahrzeugsystem oder Verfahren, wobei der Satz von Trainingsdaten durch Fahrten mit Fahrzeugen eines vorgegebene Fahrzeugtyps und/oder Fahrzeugherstellers zusammengestellt wird, wobei das Fahrzeug den vorgegebenen Fahrzeugtyp aufweist und/oder vom vorgegebenen Fahrzeughersteller stammt.

Gerade bei Verwendung einer zentralen Auswerteeinheit, beispielsweise im Rahmen eines Systems zum Flottenmanagement, kann es besonders günstig sein, die im Betrieb des erfindungsgemäßen Systems detektierten Signalinformationen und Temperaturinformationen zu nutzen, um das Positionsbestimmungsmodul weiter zu trainieren. Bevorzugt ist somit ein erfindungsgemäßes System, wobei die elektronische Auswerteeinheit dazu eingerichtet ist, ausgehend von durch das System ermittelten Temperaturinformationen und Signalinformationen unter Anwendung eines Algorithmus zum maschinellen Lernen das Positionsbestimmungsmodul weiter zu trainieren, beispielsweise im Rahmen eines überwachten Lernens.

Die Erfinder schlagen vor, dass sich der notwendige Rechenaufwand und die Qualität der erhaltenen Ergebnisse in vorteilhafter Weise verbessern lassen, wenn der elektronischen Auswerteeinheit ein Reifenplan mit geometrischen Vorgaben zur Reifenanordnung als Randbedingung vorgegeben wird. Ein solcher Reifenplan kann beispielsweise Informationen über die Zahl der Achsen, die Zahl der zwillingsbereiften Achsen oder die Spurbreite umfassen, da sich diese Parameter für ein vorgegebenes Fahrzeug regelmäßig nicht erheblich ändern werden. Bevorzugt ist entsprechend ein erfindungsgemäßes System, wobei die elektronische Auswerteeinheit dazu eingerichtet ist, die Position der Systemfahrzeugreifen unter Berücksichtigung von geometrischen Vorgaben zur Reifenanordnung, bevorzugt von vorgegebenen Reifenplätzen, in einem Reifenplan zu bestimmen, und bevorzugt die Systemfahrzeugreifen den vorgegebenen Reifenplätzen zuzuordnen.

Die durch das Positionsbestimmungsmodul bzw. die elektronische Auswerteeinheit erhaltenen Ergebnisse können von der elektronischen Auswerteeinheit vor der weiteren Verwendung, beispielsweise vor der Ausgabe über ein Display, weiter aufbereitet und in eine gewünschte Daten- und/oder Darstellungsform überführt werden. Als besonders vorteilhaft erachten es die Erfinder, wenn das entsprechende Ergebnis zudem verwendet werden kann, um einen Reifenplan, d.h. einen Satz an Zuordnungen von Systemfahrzeugreifen nebst ggf. einzuhaltenden Randbedingungen, zu erzeugen, was in dem erfindungsgemäßen System in vorteilhafter Weise möglich ist. Bevorzugt ist entsprechend ein erfindungsgemäßes System, wobei die elektronische Auswerteeinheit dazu eingerichtet ist, nach erfolgter Bestimmung der Position der Systemfahrzeugreifen einen Reifenplan mit geometrischen Vorgaben zur Reifenanordnung, bevorzugt vorgegebenen Reifenplätzen, zu erzeugen.

Nach Einschätzung der Erfinder ist das erfindungsgemäße System auch deshalb besonders vorteilhaft, weil es effizient dazu verwendet werden kann, nach dem Austausch eines Systemfahrzeugreifens und/oder deren Neuanordnung einen bestehenden Reifenplan, welcher beispielsweise vorgegeben oder vom System erzeugt wurde, anzupassen. Besonders bevorzugt ist ein erfindungsgemäßes System, wobei die elektronische Auswerteeinheit dazu eingerichtet ist, in vorgegebenen zeitlichen Abständen die Position der Systemfahrzeugreifen in der Reifenanordnung zu bestimmen.

Besonders bevorzugt ist dabei insbesondere ein erfindungsgemäßes System, wobei die elektronische Auswerteeinheit dazu eingerichtet ist, nach dem Austausch eines oder mehrerer Systemfahrzeugreifen und/oder der Positionsänderung eines oder mehrerer Systemfahrzeugreifen einen neue Reifenplan mit geometrischen Vorgaben zur Reifenanordnung, bevorzugt von vorgegebenen Reifenplätzen, zu erstellen, und bevorzugt die Systemfahrzeugreifen den vorgegebenen Reifenplätzen im neuen Reifenplan zuzuordnen, wobei das Erstellen des neuen Reifenplans bevorzugt ausgehend von einem alten Reifenplan erfolgt, der der Reifenanordnung vor dem Austausch und/oder der Positionsänderung zugeordnet ist.

Der Fachmann versteht, dass die Erfindung auch ein Fahrzeugsystem betrifft, in dem die Bestanteile des erfindungsgemäßen Systems so mit einem Fahrzeug kombiniert werden, dass eine Bestimmung der Position von Fahrzeugreifen in dessen Reifenanordnung möglich wird. Die Erfindung betrifft entsprechend ein Fahrzeugsystem, umfassend:
a) ein Fahrzeug mit Zwillingsbereifung, und
b) ein erfindungsgemäßes System zur Bestimmung der Position von Fahrzeugreifen,
wobei die zwei oder mehr Systemfahrzeugreifen des erfindungsgemäßen Systems am Fahrzeug angeordnet sind.

Die bevorzugten Ausgestaltungen des erfindungsgemäßen Fahrzeugsystems resultieren aus den vorstehenden Ausführungen zum erfindungsgemäßen System.

Bei dem Fahrzeug kann es sich prinzipiell um ein angetriebenes oder ein nicht angetriebenes Fahrzeug, beispielsweise einen Anhänger, jedoch auch um einen Zug aus angetriebenem Fahrzeug und einem Anhänger, handeln. Von besonderer Praxisrelevanz ist insoweit ein erfindungsgemäßes Fahrzeugsystem, wobei das Fahrzeug ein Nutzfahrzeug ist, bevorzugt ein LKW oder ein Bus. Denkbar ist insoweit ein erfindungsgemäßes Fahrzeugsystem, wobei das Fahrzeug neben Systemfahrzeugreifen weitere Fahrzeugreifen umfasst, bei denen es sich nicht um Systemfahrzeugreifen handelt. Beispielhaft ist ein erfindungsgemäßes Fahrzeugsystem, wobei das Fahrzeug drei oder mehr Achsen umfasst.

Wegen der synergistischen Vorteile bevorzugt ist ein erfindungsgemäßes Fahrzeugsystem, wobei das Fahrzeugsystem zumindest eine Achse mit drei oder mehr, bevorzugt 4 oder mehr, Systemfahrzeugreifen umfasst.

Bevorzugt ist entsprechend ein erfindungsgemäßes Fahrzeugsystem, wobei die Empfangseinheit am Fahrzeug angeordnet ist. Besonders bevorzugt ist dabei ein erfindungsgemäßes Fahrzeugsystem, wobei die Empfangseinheit seitlich neben der Längsachse und/oder der Querachse des Fahrzeugs angeordnet ist. Bevorzugt ist alternativ ein erfindungsgemäßes Fahrzeugsystem, wobei die Empfangseinheit durch ein mobiles Endgerät, beispielsweise durch ein Mobiltelefon, gebildet wird. In diesem Fall einer mobilen Empfangseinheit ist es für viele Fälle zweckmäßig, wenn die Positionierung der mobilen Empfangseinheit im Fahrzeug vorgegeben wird.

Für Anwendungen, in denen besonders autarke Fahrzeugsystem wünschenswert sind, beispielsweise in Regionen mit schlechter digitaler Infrastruktur, ist ein erfindungsgemäßes Fahrzeugsystem bevorzugt, wobei die elektronische Auswerteeinheit am Fahrzeug angeordnet ist, wobei die elektronische Auswerteeinheit und die Empfangseinheit bevorzugt durch die gleiche Vorrichtung gebildet werden.

Insbesondere für Anwendungen im Bereich des Flottenmanagements von Nutzfahrzeugflotten bevorzugt ist ein erfindungsgemäßes Fahrzeugsystem, wobei die elektronische Auswerteeinheit durch eine außerhalb des Fahrzeuges befindliche Datenverarbeitungsvorrichtung gebildet wird, bevorzugt durch eine zentrale Datenverarbeitungsvorrichtung eines Netzwerkes oder die Datenverarbeitungsvorrichtung einer lokalen Auswerteeinrichtung.

Da das erfindungsgemäße Fahrzeugsystem, bzw. das zugrundeliegende erfindungsgemäße System bzw. Verfahren, auf den Einsatz von Temperaturinformationen aus den Systemfahrzeugreifen bei der Auswertung setzen, schlagen die Erfinder vor, dass die Qualität der Zuordnung weiter erhöht werden kann, wenn zudem Umweltdaten berücksichtigt werden, welche die Reifentemperatur beeinflussen können. Die Erfinder schlagen vor, dass diese bevorzugt unmittelbar über Umweltsensoren des Fahrzeuges bestimmt werden können. Alternativ sind Informationen über Umwelteinflüsse jedoch auch aus den geographischen Positionsdaten des Fahrzeuges ableitbar, wie sie beispielsweise über GPS-Informationen und deren Abgleich mit Wetterdaten verfügbar sind. Bevorzugt ist folglich ein erfindungsgemäßes Fahrzeugsystem, wobei das Fahrzeug einen oder mehrere Umweltsensoren, insbesondere Temperatursensoren und/oder Regensensoren, zur Bestimmung von äußeren Umwelteinflüssen, umfasst, wobei die elektronische Auswerteeinheit dazu eingerichtet ist, die äußeren Umwelteinflüsse als Korrekturfaktor zu berücksichtigen. Bevorzugt ist zusätzlich oder alternativ ein erfindungsgemäßes Fahrzeugsystem, wobei das Fahrzeug eine Positionsbestimmungseinheit zum Bestimmen von geographischen Positionsdaten umfasst, wobei die elektronische Auswerteeinheit dazu eingerichtet ist, aus den geographischen Positionsdaten über den Abgleich mit einer Datenbank Informationen über lokale Umwelteinflüsse abzuleiten und die Informationen zu lokalen Umwelteinflüssen als Korrekturfaktor zu berücksichtigen.

Die Erfindung betrifft auch ein Verfahren, dessen Funktionsweise sich für den Fachmann aus den vorstehenden Beschreibungen zum erfindungsgemäßen System erschließt, wobei solche Verfahren bevorzugt sind, die die Vorteile bevorzugter erfindungsgemäßer Systeme nutzen.

Die Erfindung betrifft somit insbesondere auch ein Verfahren zur Bestimmung der Position von Fahrzeugreifen mit einem erfindungsgemäßen System oder in dem erfindungsgemäßen Fahrzeugsystem, umfassend für jeden Systemfahrzeugreifen die Verfahrensschritte:
x1) Bestimmen einer dem Systemfahrzeugreifen zugeordneten Temperaturinformation mit der Temperatursensoreinheit, wobei die Temperaturinformation eine zeitabhängige Temperaturinformation ist,
x2) Senden eines Signals mit der Sendeeinheit des Systemfahrzeugreifens,
x3) Empfangen der gesendeten Signals mit der Empfangseinheit und Erhalten einer dem Systemfahrzeugreifen zugeordneten Signalinformation,
sowie die Verfahrensschritte:
y) Übermitteln der Temperaturinformationen und der Signalinformationen durch die Empfangseinheit an die elektronische Auswerteeinheit, und
z) Bestimmen der Position der Systemfahrzeugreifen aus den Temperaturinformationen und den Signalinformationen mit der elektronischen Auswerteeinheit mittels des Positionsbestimmungsmoduls.

Bevorzugt ist im Lichte der vorstehenden Ausführungen besonders ein erfindungsgemäßes Verfahren, wobei der Verfahrensschritt y) zusätzlich den Schritt:
y2) Übermitteln von einer oder mehreren weiteren Parameterinformationen durch die Empfangseinheit an die elektronische Auswerteeinheit.
umfasst.

Bevorzugt ist im Lichte der vorstehenden Ausführungen auch ein erfindungsgemäßes Verfahren, wobei die elektronische Auswerteeinheit die Position der Systemfahrzeugreifen unter Berücksichtigung von geometrischen Vorgaben zur Reifenanordnung, bevorzugt von vorgegebenen Reifenplätzen, in einem Reifenplan bestimmt, und bevorzugt die Systemfahrzeugreifen den vorgegebenen Reifenplätzen zuordnet.

Für die Praxis besonders relevant ist ein erfindungsgemäßes Verfahren, wobei das Verfahren im Fahrbetrieb des Fahrzeuges durchgeführt wird. Bevorzugt ist zusätzlich oder alternativ ein erfindungsgemäßes Verfahren, wobei das Verfahren in vorgegebenen zeitlichen Abständen wiederholt wird, um die Position der Systemfahrzeugreifen in der Reifenanordnung zu bestimmen.

Bevorzugt ist somit auch ein erfindungsgemäßes Verfahren, wobei das Verfahren nach dem Austausch eines Systemfahrzeugreifens und/oder der Positionsänderung eines Systemfahrzeugreifens zusätzlich den Verfahrensschritt z2):
z2) Erstellen eines neue Reifenplans mit geometrischen Vorgaben zur Reifenanordnung, bevorzugt von vorgegebenen Reifenplätzen mit einer Zuordnung der Systemfahrzeugreifen zu den vorgegebenen Reifenplätzen, wobei das Erstellen des neuen Reifenplans bevorzugt ausgehend von einem alten Reifenplan erfolgt, der der Reifenanordnung vor dem Austausch und/oder der Positionsänderung zugeordnet war,
umfasst.

Nachfolgend werden die Erfindung und bevorzugte Ausführungsformen der Erfindung unter Bezugnahme auf die beiliegende Figur näher erläutert und beschrieben. Dabei zeigt:

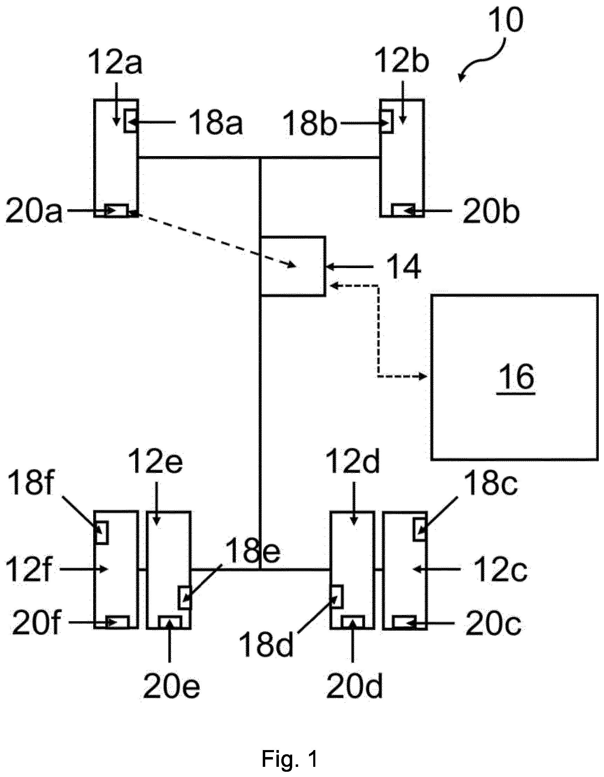

- Fig. 1: eine schematische Konzeptdarstellung eines erfindungsgemäßen Systems in einer bevorzugten Ausführungsform.

Fig. 1 zeigt eine schematische Konzeptdarstellung eines erfindungsgemäßen Systems 10 in einer bevorzugten Ausführungsform, bei dem sechs Systemfahrzeugreifen 12a, 12b, 12c, 12d, 12e, 12f eine Reifenanordnung bilden. Die Systemfahrzeugreifen 12a-f sind an den Achsen eines Fahrzeuges angeordnet, welches eine Achse mit Zwillingsbereifung aufweist und bei dem es sich beispielsweise um einen LKW handeln kann. Somit zeigt Fig. 1 auch ein schematisches Beispiel für ein erfindungsgemäßes Fahrzeugsystem.

In dem beispielhaften System 10 der Fig. 1 umfasst jeder Systemfahrzeugreifen 12a-f genau eine Sendeeinheit 20a, 20b, 20c, 20d, 20e, 20f, die über Funk mit der zentralen Empfangseinheit 14 kommuniziert und die im Wesentlichen baugleich ausgeführt sind. In Fig. 1 ist am Beispiel des Systemfahrzeugreifens 12a der drahtlose Kommunikationspfad mit der Empfangseinheit als gestrichelter Pfeil eingetragen.

Die Signalstärke der von den Sendeeinheiten 20a-f ausgegebenen Signale wird von der relativ zur Fahrzeugachse versetzt angeordneten Empfangseinheit 14 registriert, so dass ein Satz von Signalinformationen erhalten wird, die von der Auswerteeinheit 16 zur Bestimmung der Position der Fahrzeugreifen in der Reifenanordnung verwendet werden können.

Zudem umfasst in dem beispielhaften System 10 der Fig. 1 jeder Systemfahrzeugreifen 12a-f genau eine Temperatursensoreinheit 18a, 18b, 18c, 18d, 18e, 18f, mit der der Temperaturverlauf im Inneren der Systemfahrzeugreifen 12a-f gemessen werden kann, um eine zeitabhängig Temperaturinformation zu erhalten, die über die Sendeeinheiten 20a-f an die Empfangseinheit 14 übermittelt werden. Die Temperatursensoreinheiten 18a-f sind im gezeigten Beispiel dazu eingerichtet, als zeitabhängig Temperaturinformation eine Vielzahl an disktreten Temperaturwerten in einem zeitlichen Abstand im Bereich von 16 bis 128 s zu bestimmen.

In der schematischen Darstellung der Fig. 1 sind die Temperatursensoreinheiten 18a-f und die Sendeeinheiten 20a-f aus Gründen der besseren Unterscheidbarkeit voneinander separiert und an unterschiedlichen Positionen im Systemfahrzeugreifen 12a-f positioniert. Bevorzugt ist es jedoch, wenn die Temperatursensoreinheiten 18a-f und die Sendeeinheiten 20a-f durch das gleiche Bauteil gebildet werden.

Im gezeigten Beispiel der Fig. 1 ist die Auswerteeinheit 16 außerhalb des Fahrzeuges angeordnet und wird durch einen Server gebildet, mit dem die Empfangseinheit 14 beispielsweise über Mobilfunk kommunizieren kann.

Die Auswerteeinheit 16 umfasst auf ihrer Speichereinheit das zuvor trainierte Positionsbestimmungsmodul, welches auf einem Algorithmus zum maschinellen Lernen basiert, bevorzugt einem künstlichen neuronalen Netz. Der zum Training des Positionsbestimmungsmoduls verwendete Satz an Trainigsdaten kann beispielsweise dadurch erzeugt werden, dass das in Fig. 1 gezeigte Fahrzeug neben ansonsten ordinären Fahrzeugreifen lediglich mit drei Systemfahrzeugreifen 12a-f ausgerüstet wird, die sich über die Signalstärke zuverlässig voneinander unterscheiden lassen, beispielsweise die Systemfahrzeugreifen 12a, 12d und 12f. Mit diesem Fahrzeug können beispielsweise im Fahrbetrieb Signalinformationen und Temperaturinformationen erhalten werden, denen die Reifenpositionen zugeordnet werden können. Zur Komplettierung des einfachsten Satzes an Trainigsdaten kann die Position der drei Systemfahrzeugreifen 12a-f am Fahrzeug anschließend so lange variiert werden, bis Signalinformationen und Temperaturinformationen für jede der möglichen Positionen erhalten wurden.

### Bezugszeichenliste

- 10: System
- 12a-f: Systemfahrzeugreifen
- 14: Elektronische Empfangseinheit
- 16: Elektronische Auswerteeinheit
- 18a-f: Temperatursensoreinheit
- 20a-f: Elektronische Sendeeinheit

## Patentansprüche

1. System (10) zur Bestimmung der Position von Fahrzeugreifen in einer Reifenanordnung eines Fahrzeuges mit Zwillingsbereifung, umfassend:
i) zwei oder mehr Systemfahrzeugreifen (12a-f),
ii) eine zentrale elektronische Empfangseinheit (14) zum Empfangen von Signalen in einem drahtlosen Übertragungsverfahren, und
iii) eine elektronische Auswerteeinheit (16), mit einer Speichereinheit,
wobei jeder Systemfahrzeugreifen (12a-f) eine Temperatursensoreinheit (18a-f) zum Bestimmen einer dem jeweiligen Systemfahrzeugreifen (12a-f) zugeordneten Temperaturinformation umfasst, wobei die Temperaturinformation eine zeitabhängige Temperaturinformation ist,
wobei jeder Systemfahrzeugreifen (12a-f) eine elektronische Sendeeinheit (20a-f) zum Senden von Signalen in einem drahtlosen Übertragungsverfahren umfasst,
wobei die Empfangseinheit (14) dazu eingerichtet ist, die von den Sendeeinheiten (20a-f) der Systemfahrzeugreifen (12a-f) gesendeten Signale zu empfangen und deren Signalstärke zu ermitteln, um eine dem jeweiligen Systemfahrzeugreifen (12a-f) zugeordnete Signalinformation zu erhalten,
wobei die Empfangseinheit (14) dazu eingerichtet ist, für jeden Systemfahrzeugreifen (12a-f) die Temperaturinformation und die Signalinformation an die elektronische Auswerteeinheit (16) zu übermitteln,
wobei auf der Speichereinheit ein auf maschinellem Lernen basierendes Positionsbestimmungsmodul gespeichert ist, wobei die elektronische Auswerteeinheit (16) dazu eingerichtet ist, die Temperaturinformationen und die Signalinformationen als Eingabe in das Positionsbestimmungsmodul zu geben und die Position der Systemfahrzeugreifen (12a-f) in der Reifenanordnung zu bestimmen,
wobei das Positionsbestimmungsmodul dazu trainiert ist, aus den Temperaturinformationen und den Signalinformationen von Systemfahrzeugreifen (12a-f) in einer Reifenanordnung die Position der Systemfahrzeugreifen (12a-f) in der Reifenanordnung zu bestimmen, und
wobei das Training mit einem Satz von Trainingsdaten erfolgt, welcher für eine Vielzahl von Reifenanordnungen mit bekannter Position der Systemfahrzeugreifen (12a-f) Temperaturinformationen und Signalinformationen umfasst.

2. System (10) nach Anspruch 1, wobei die Empfangseinheit (14) eine Funkeinheit zum Empfangen von Signalen mittels Funktechnik ist, bevorzugt mit einer Frequenz im Bereich von 300 bis 450 MHz.

3. System (10) nach einem der Ansprüche 1 oder 2, wobei die Sendeeinheiten (20a-f) Funkeinheiten zum Senden von Signalen mittels Funktechnik sind, bevorzugt mit einer Frequenz im Bereich von 300 bis 450 MHz.

4. System (10) nach einem der Ansprüche 1 bis 3, wobei die Systemfahrzeugreifen (12a-f) eine oder mehrere weitere Sensoreinheiten zur Bestimmung einer oder mehrerer weiterer Parameterinformationen, der Systemfahrzeugreifen (12a-f) umfassen, wobei die Empfangseinheit (14) dazu eingerichtet ist, für jeden Systemfahrzeugreifen (12a-f) die eine oder die mehreren Parameterinformationen an die elektronische Auswerteeinheit (16) zu übermitteln, wobei die elektronische Auswerteeinheit (16) dazu eingerichtet ist, die Temperaturinformationen, die Signalinformationen und die eine oder die mehreren Parameterinformationen als Eingabe in das Positionsbestimmungsmodul zu geben und die Position der Systemfahrzeugreifen (12a-f) in der Reifenanordnung zu bestimmen, wobei das Positionsbestimmungsmodul dazu trainiert ist, aus den Temperaturinformationen, den Signalinformationen und der einen oder den mehreren Parameterinformationen von Systemfahrzeugreifen (12a-f) in einer Reifenanordnung die Position der Systemfahrzeugreifen (12a-f) in der Reifenanordnung zu bestimmen, wobei das Training mit einem Satz von Trainingsdaten erfolgt, welcher für eine Vielzahl von Reifenanordnungen mit bekannter Position der Systemfahrzeugreifen (12a-f) Temperaturinformationen, Signalinformationen und eine oder mehrere Parameterinformationen umfasst.

5. System (10) nach Anspruch 4, wobei die eine oder die mehreren weiteren Sensoreinheiten ausgewählt sind aus der Gruppe bestehend aus Drucksensoren und Beschleunigungssensoren.

6. System (10) nach einem der Ansprüche 1 bis 5, wobei die elektronische Auswerteeinheit (16) dazu eingerichtet ist, die Position der Systemfahrzeugreifen (12a-f) unter Berücksichtigung von geometrischen Vorgaben zur Reifenanordnung in einem Reifenplan zu bestimmen.

7. System nach einem der Ansprüche 1 bis 6, wobei die elektronische Auswerteeinheit (16) dazu eingerichtet ist, nach erfolgter Bestimmung der Position der Systemfahrzeugreifen (12a-f) einen Reifenplan mit geometrischen Vorgaben zur Reifenanordnung zu erzeugen.

8. Fahrzeugsystem, umfassend:
a) ein Fahrzeug mit Zwillingsbereifung, und
b) ein System (10) zur Bestimmung der Position von Fahrzeugreifen nach einem der Ansprüche 1 bis 7,
wobei die zwei oder mehr Systemfahrzeugreifen (12a-f) des Systems (10) am Fahrzeug angeordnet sind.

9. Verfahren zur Bestimmung der Position von Fahrzeugreifen mit einem System (10) nach einem der Ansprüche 1 bis 7 oder einem Fahrzeugsystem nach Anspruch 8, umfassend für jeden Systemfahrzeugreifen (12a-f) die Verfahrensschritte:
x1) Bestimmen einer dem Systemfahrzeugreifen (12a-f) zugeordneten Temperaturinformation mit der Temperatursensoreinheit (18a-f), wobei die Temperaturinformation eine zeitabhängige Temperaturinformation ist,
x2) Senden eines Signals mit der Sendeeinheit (20a-f) des Systemfahrzeugreifens (12a-f),
x3) Empfangen der gesendeten Signals mit der Empfangseinheit (14) und Erhalten einer dem Systemfahrzeugreifen (12a-f) zugeordneten Signalinformation,
sowie die Verfahrensschritte:
y) Übermitteln der Temperaturinformationen und der Signalinformationen durch die Empfangseinheit (14) an die elektronische Auswerteeinheit (16), und
z) Bestimmen der Position der Systemfahrzeugreifen (12a-f) aus den Temperaturinformationen und den Signalinformationen mit der elektronischen Auswerteeinheit (16) mittels des Positionsbestimmungsmoduls.

## Claims

1. System (10) for determining the position of vehicle tyres in a tyre arrangement of a vehicle with twin tyres, comprising:
i) two or more system vehicle tyres (12a-f),
ii) a central electronic receiving unit (14) for receiving signals in a wireless transmission process, and
iii) an electronic evaluation unit (16), with a storage unit,
wherein each system vehicle tyre (12a-f) comprises a temperature sensor unit (18a-f) for determining temperature information assigned to the respective system vehicle tyre (12a-f), the temperature information being time-dependent temperature information,
wherein each system vehicle tyre (12a-f) comprises an electronic transmitting unit (20a-f) for transmitting signals in a wireless transmission process,
wherein the receiving unit (14) is designed to receive the signals transmitted by the transmitting units (20a-f) of the system vehicle tyres (12a-f) and to determine their signal strength in order to obtain signal information assigned to the respective system vehicle tyre (12a-f),
wherein the receiving unit (14) is designed to transmit the temperature information and the signal information to the electronic evaluation unit (16) for each system vehicle tyre (12a-f),
wherein a position-determining module based on machine learning is stored on the storage unit, the electronic evaluation unit (16) being designed to enter the temperature information and the signal information as input into the position-determining module and to determine the position of the system vehicle tyres (12a-f) in the tyre arrangement,
wherein the position-determining module is trained to determine from the temperature information and the signal information of system vehicle tyres (12a-f) in a tyre arrangement the position of the system vehicle tyres (12a-f) in the tyre arrangement, and
wherein the training is performed with a set of training data which comprises temperature information and signal information for a multiplicity of tyre arrangements with a known position of the system vehicle tyres (12a-f).

2. System (10) according to Claim 1, wherein the receiving unit (14) is a radio unit for receiving signals by means of radio technology, preferably with a frequency in the range from 300 to 450 MHz.

3. System (10) according to either of Claims 1 and 2, wherein the transmitting units (20a-f) are radio units for transmitting signals by means of radio technology, preferably with a frequency in the range from 300 to 450 MHz.

4. System (10) according to one of Claims 1 to 3, wherein the system vehicle tyres (12a-f) comprise one or more further sensor units for determining one or more further items of parameter information of the system vehicle tyres (12a-f), the receiving unit (14) being designed to transmit the one or more items of parameter information to the electronic evaluation unit (16) for each system vehicle tyre (12a-f), the electronic evaluation unit (16) being designed to enter the temperature information, the signal information and the one or more items of parameter information as input into the position-determining module and to determine the position of the system vehicle tyres (12a-f) in the tyre arrangement, the position-determining module being trained to determine from the temperature information, the signal information and the one or more items of parameter information of system vehicle tyres (12a-f) in a tyre arrangement the position of the system vehicle tyres (12a-f) in the tyre arrangement, the training being performed with a set of training data which comprises temperature information, signal information and one or more items of parameter information for a multiplicity of tyre arrangements with a known position of the system vehicle tyres (12a-f).

5. System (10) according to Claim 4, wherein the one or more further sensor units are selected from the group consisting of pressure sensors and acceleration sensors.

6. System (10) according to one of Claims 1 to 5, wherein the electronic evaluation unit (16) is designed to determine the position of the system vehicle tyres (12a-f) while taking into account geometric specifications relating to the tyre arrangement in a tyre plan.

7. System according to one of Claims 1 to 6, wherein the electronic evaluation unit (16) is designed to generate a tyre plan with geometric specifications for the tyre arrangement after the position of the system vehicle tyres (12a-f) has been determined.

8. Vehicle system comprising:
a) a vehicle with twin tyres, and
b) a system (10) for determining the position of vehicle tyres according to one of Claims 1 to 7,
wherein the two or more system vehicle tyres (12a-f) of the system (10) are arranged on the vehicle.

9. Method for determining the position of vehicle tyres with a system (10) according to one of Claims 1 to 7 or a vehicle system according to Claim 8, comprising for each system vehicle tyre (12a-f) the method steps of:
x1) determining temperature information assigned to the system vehicle tyre (12a-f) with the temperature sensor unit (18a-f), the temperature information being time-dependent temperature information,
x2) transmitting a signal with the transmitting unit (20a-f) of the system vehicle tyre (12a-f),
x3) receiving the transmitted signal with the receiving unit (14) and obtaining signal information assigned to the system vehicle tyre (12a-f),
and the method steps of:
y) transmitting the temperature information and the signal information by the receiving unit (14) to the electronic evaluation unit (16), and
z) determining the position of the system vehicle tyres (12a-f) from the temperature information and the signal information with the electronic evaluation unit (16) by means of the position-determining module.

## Revendications

1. Système (10) permettant de déterminer la position de pneus de véhicule dans un ensemble de pneus d'un véhicule à pneus jumelés, comprenant :
i) deux ou plusieurs pneus de véhicule polyvalent (12a-f),
ii) une unité de réception électronique centrale (14) pour recevoir des signaux dans un procédé de transmission sans fil, et
iii) une unité d'évaluation électronique (16), comprenant une unité de stockage,
dans lequel chaque pneu de véhicule polyvalent (12a-f) comprend une unité de capteur de température (18a-f) pour déterminer une information de température associée au pneu de véhicule polyvalent (12a-f) respectif, l'information de température étant une information de température dépendante du temps,
dans lequel chaque pneu de véhicule polyvalent (12a-f) comprend une unité d'émission électronique (20a-f) pour émettre des signaux dans un procédé de transmission sans fil,
dans lequel l'unité de réception (14) est conçue pour recevoir les signaux émis par les unités d'émission (20a-f) des pneus de véhicule polyvalent (12a-f) et pour déterminer leur intensité de signal afin d'obtenir une information de signal associée au pneu de véhicule polyvalent (12a-f) respectif,
dans lequel l'unité de réception (14) est conçue pour communiquer pour chaque pneu de véhicule polyvalent (12a-f) l'information de température et l'information de signal à l'unité d'évaluation électronique (16),
dans lequel un module de positionnement basé sur un apprentissage machine est stocké sur l'unité de stockage, l'unité d'évaluation électronique (16) étant conçue pour fournir les informations de température et les informations de signal en entrée au module de positionnement et pour déterminer la position des pneus de véhicule polyvalent (12a-f) dans l'ensemble de pneus,
dans lequel le module de positionnement est entraîné pour déterminer à partir des informations de température et des informations de signal des pneus de véhicule polyvalent (12a-f) dans un ensemble de pneus la position des pneus de véhicule polyvalent (12a-f) dans l'ensemble de pneu, et
dans lequel l'entraînement est effectué avec un jeu de données d'entraînement qui comprend des informations de température et des informations de signal pour une pluralité d'ensembles de pneus avec des positions connues des pneus de véhicule polyvalent (12a-f).

2. Système (10) selon la revendication 1, dans lequel l'unité de réception (14) est une unité radio pour recevoir des signaux par radiotechnique, de préférence à une fréquence dans la plage de 300 à 450 MHz.

3. Système (10) selon l'une quelconque des revendications 1 ou 2, dans lequel les unités d'émission (20a-f) sont des unités radio pour émettre des signaux par radiotechnique, de préférence à une fréquence dans la plage de 300 à 450 MHz.

4. Système (10) selon l'une quelconque des revendications 1 à 3, dans lequel les pneus de véhicule polyvalent (12a-f) comprennent une ou plusieurs unités de capteur supplémentaires pour déterminer une ou plusieurs autres informations de paramètre des pneus de véhicule polyvalent (12a-f), dans lequel l'unité de réception (14) est conçue pour communiquer à l'unité d'évaluation électronique (16) ladite une ou les plusieurs informations de paramètre pour chaque pneu de véhicule polyvalent (12a-f), dans lequel l'unité d'évaluation électronique (16) est conçue pour fournir les informations de température, les informations de signal et ladite une ou les plusieurs informations de paramètre en entrée au module de positionnement et pour déterminer la position des pneus de véhicule polyvalent (12a-f) dans l'ensemble de pneus, dans lequel le module de positionnement est entraîné pour déterminer à partir des informations de température, des informations de signal et de ladite une ou des plusieurs informations de paramètre des pneus de véhicule polyvalent (12a-f) dans un ensemble de pneus la position des pneus de véhicule polyvalent (12a-f) dans l'ensemble de pneu, dans lequel l'entraînement est effectué avec un jeu de données d'entraînement qui comprend des informations de température, des informations de signal et une ou plusieurs informations de paramètre pour une pluralité d'ensembles de pneus avec des positions connues des pneus de véhicule polyvalent (12a-f).

5. Système (10) selon la revendication 4, dans lequel ladite une ou les plusieurs autres unités de capteur sont sélectionnées dans le groupe composé de capteurs de pression et de capteurs d'accélération.

6. Système (10) selon l'une quelconque des revendications 1 à 5, dans lequel l'unité d'évaluation électronique (16) est conçue pour déterminer la position des pneus de véhicule polyvalent (12a-f) en tenant compte de spécifications géométriques pour l'ensemble de pneus dans un plan de pneus.

7. Système selon l'une quelconque des revendications 1 à 6, dans lequel, une fois la position des pneus de véhicule polyvalent (12a-f) déterminée, l'unité d'évaluation électronique (16) est conçue pour générer un plan de pneus avec des spécifications géométriques pour l'ensemble de pneus.

8. Système de véhicule, comprenant :
a) un véhicule à pneus jumelés, et
b) un système (10) pour déterminer la position de pneus de véhicule selon l'une quelconque des revendications 1 à 7,
dans lequel les deux ou plusieurs pneus de véhicule polyvalent (12a-f) du système (10) sont disposés sur le véhicule.

9. Procédé permettant de déterminer la position de pneus de véhicule à l'aide d'un système (10) selon l'une quelconque des revendications 1 à 7 ou d'un système de véhicule selon la revendication 8, comprenant pour chaque pneu de véhicule polyvalent (12a-f) les étapes de procédé consistant à :
x1) déterminer une information de température associée au pneu de véhicule polyvalent (12a-f) à l'aide de l'unité de capteur de température (18a-f), l'information de température étant une information de température dépendante du temps,
x2) émettre un signal à l'aide de l'unité d'émission (20a-f) du pneu de véhicule polyvalent (12a-f),
x3) recevoir le signal émis à l'aide de l'unité de réception (14) et obtenir une information de signal associée au pneu de véhicule polyvalent (12a-f),
ainsi que les étapes de procédé consistant à :
y) communiquer les informations de température et les informations de signal par l'unité de réception (14) à l'unité d'évaluation électronique (16),
z) déterminer la position des pneus de véhicule polyvalent (12a-f) à partir des informations de température et des informations de signal de l'unité d'évaluation électronique (16) au moyen du module de positionnement.
